Europäisches Patentamt

European Patent Office

Office européen des brevets

(19)

(11) Numéro de publication: **0 011 023**
**A1**

(12) # DEMANDE DE BREVET EUROPEEN

(21) Numéro de dépôt: 79400786.4

(22) Date de dépôt: 23.10.79

(51) Int. Cl.³: **H 04 N 1/028**

(30) Priorité: 03.11.78 FR 7831122

(43) Date de publication de la demande: **14.05.80**
**Bulletin 80/10**

(84) Etats contractants désignés: **DE GB NL**

(71) Demandeur: **"THOMSON-CSF", 173, boulevard Haussmann, F-75360 Paris Cedex 08 (FR)**

(72) Inventeur: **Revillet, Bernard, "THOMSON-CSF" - SCPI 173, bld Haussmann, F-75360 Paris Cédex 08 (FR)**

(74) Mandataire: **Courtellemont, Alain et al, "THOMSON-CSF" - SCPI 173, bld Haussmann, F-75360 Paris Cedex 08 (FR)**

(54) **Dispositif d'analyse par photosenseurs et appareil de fac-similé comportant un tel dispositif.**

(57) Dispositif d'analyse d'un document au moyen de photosenseurs réalisant une exploration ligne par ligne du document.

Une plaquette de photosenseurs d'analyse (1), élabore par accumulation de charges électriques, à partir d'une image lumineuse de la ligne à analyser, une information relative à cette ligne. Pour que la quantité de lumière fournie au document pendant l'élaboration de cette information soit constante, un photosenseur de référence (15) est clairé par la même source de lumière que le document. Au moment où commence l'analyse d'une ligne, un dispositif de mesure (15 et 30 à 35), comportant le photosenseur de référence (15), commence à mesurer la quantité de lumière fournie au document. Quand cette quantité atteint une valeur prédéterminée un signal (P) est produit qui déclenche la lecture des charges accumulées.

Application aux appareils de fac-similé.

# DISPOSITIF D'ANALYSE PAR PHOTOSENSEURS ET APPAREIL DE FAC-SIMILÉ COMPORTANT UN TEL DISPOSITIF

La présente invention se rapporte à un dispositif d'analyse ligne par ligne d'un document, comportant une source de lumière, n photosenseurs (n supérieur à 1), et des moyens de commande pour rendre sensiblement constante la quantité de lumière reçue par le document pendant la durée de l'élaboration par les n photosenseurs d'une information relative à une ligne de ce document, ces moyens de commande comportant un $(n+1)^e$ photosenseur.

La présente invention se rapporte également à des appareils de fac-similé utilisant des dispositifs d'analyse ligne par ligne d'un document au moyen de photosenseurs.

Il est connu d'employer des appareils de fac-similé dans lesquels les n photosenseurs sont disposés en ligne sur une même plaquette semi-conductrice et, actuellement, il est commercialisé des plaquettes comportant jusqu'à 2048 photosenseurs. Dans ces appareils de fac-similé un système optique forme l'image d'une ligne ou d'une fraction de ligne du document à reproduire sur un ou plusieurs alignements de photosenseurs, chaque photosenseur permettant d'accumuler des charges électriques grâce à la lumière qu'il reçoit. La charge totale disponible, pour chaque photosenseur, est proportionnelle, tant que n'apparaît pas le phénomène de saturation, d'une part au temps d'exposition à la lumière et d'autre part à l'intensité de la lumière. Le temps d'exposition et l'intensité de la lumière sont donc réglés de manière que n'intervienne pas le phénomène de saturation.

Dans ces appareils de fac-similé la source de lumière utilisée est généralement constituée d'un ou plusieurs tubes fluorescents choisis pour leur faible consommation électrique et leur bon rendement lumineux.

La lumière émise par un tube fluorescent varie fortement au rythme de son alimentation. En Europe, où l'énergie distribuée sur le secteur est à une fréquence de 50 Hz, quand le tube fluorescent est alimenté directement par le secteur, ce qui est le cas le plus général pour des raisons d'économie, l'intensité lumineuse présente une ondulation parasite de 100 Hz.

Une bonne reproduction de document nécessite une quantité de lumière identique pour l'éclairement de chaque ligne du document pendant la durée d'intégration de la lumière dans les n photosenseurs, c'est-à-dire pendant le temps où la lumière a été reçue par les photosenseurs pour produire une information relative à une ligne. Pour obtenir cela malgré l'ondulation parasite de l'intensité lumineuse il est connu d'intégrer la lumière dans les n photosenseurs pendant un temps égal à un nombre entier de périodes de l'ondulation; ceci est, par exemple, obtenu en utilisant le $(n+1)^e$ photosenseur et en commandant la durée d'intégration de la lumière dans les n autres photosenseurs en fonction de l'ondulation du courant de ce $(n+1)^e$ photosenseur.

De tels moyens de réglage ne permettent un éclairement identique de chaque ligne du document que dans la mesure où la tension du secteur et la température du tube fluorescent ne varient pas et dans la mesure où les caractéristiques du tube ne sont pas modifiées, en raison, par exemple, d'un vieillissement de ce tube.

Le but de l'invention est de proposer un dispositif d'analyse par photosenseurs où l'éclairement d'une ligne du document à reproduire n'est fonction ni de l'ondulation parasite sus-mentionnée, ni des variations de la tension du secteur ou des variations propres à la source de lumière.

Selon l'invention il est possible d'atteindre ce but à partir d'un dispositif classique d'analyse ligne par ligne d'un document, comportant une source de lumière, un circuit de lecture incluant n photosenseurs (n supérieur à 1), pour recevoir une partie de la lumière ayant éclairé une ligne du document afin d'élaborer une information, et des moyens de commande pour rendre sensiblement constante la quantité de lumière reçue par le document pendant l'élaboration de l'information, ces moyens de commande comportant un $(n+1)^e$ photosenseur, ce $(n+1)^e$ photosenseur étant éclairé par la source. Pour cela les moyens de commande du dispositif d'analyse doivent, en particulier, comporter : des moyens d'intégration incluant le $(n+1)^e$ photosenseur et fournissant un premier signal représentatif de la quantité de lumière fournie par la source ; des moyens de comparaison fournissant un second signal quand le premier signal atteint une valeur donnée ; et des moyens de déclenchement pour déclencher, en fonction du second signal, l'envoi de l'information produite par le circuit de lecture.

La présente invention sera mieux comprise et d'autres caractéristiques apparaîtront à l'aide de la description ci-après et des figures s'y rapportant qui représentent :

- la figure 1, une vue partielle schématique d'un appareil de fac-similé comportant un dispositif selon l'invention ;

- la figure 2, la plaquette de photosenseurs utilisée dans l'appareil selon la figure 1 ;

- la figure 3, un dispositif selon l'invention ;

- la figure 4, un diagramme des temps relatif à différents signaux apparaissant dans le dispositif selon la figure 3.

Sur les différentes figures les mêmes symboles représentent les mêmes éléments.

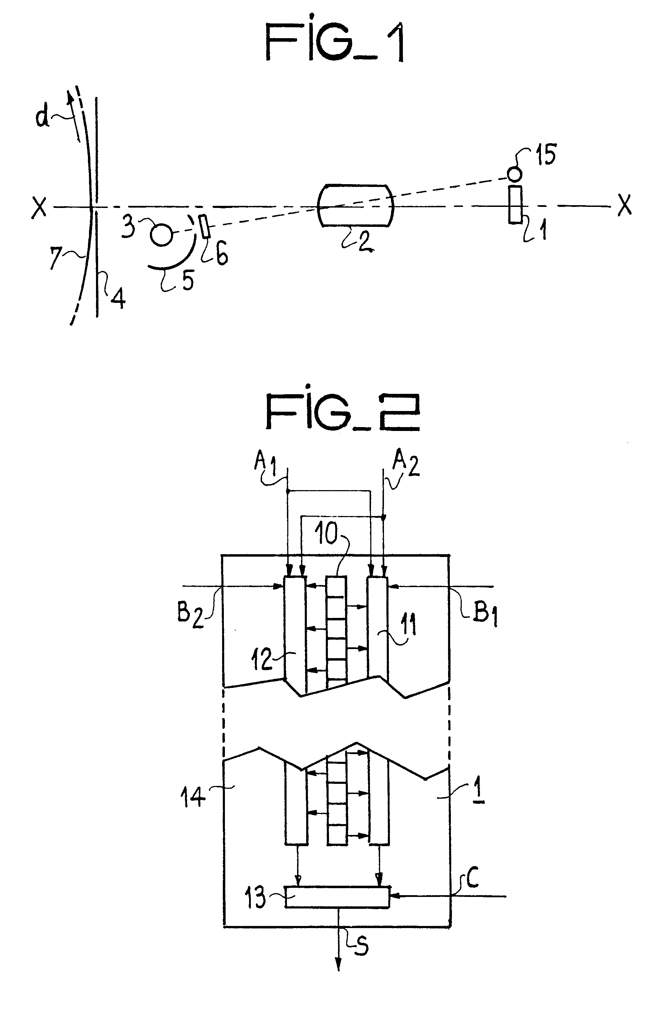

La figure 1 représente un appareil de fac-similé dans lequel le document à reproduire, 7, est déplacé de manière discontinue, ligne par ligne (flèche d) derrière un écran 4 percé d'une fente rectiligne perpendiculaire au plan de la figure. Une source lumineuse composée d'un tube fluorescent 3 et d'un réflecteur concave 5 éclaire le document à travers la fente de l'écran 4. Un objectif 2 d'axe optique XX forme, sur un alignement de 1728 photosenseurs portés par une plaquette 1, une image de la partie éclairée du document 7; une vue plus détaillée de la plaquette 1 est donnée par la figure 2 qui sera décrite plus loin.

Le réflecteur 5 est percé d'un trou et derrière ce trou est placé un filtre 6. L'objectif 2 donne du trou du réflecteur une image qui se forme au voisinage de la plaquette 1 en un point où est disposé un photosenseur constitué par une photodiode BPX92 de SIEMENS ; ce photosenseur sera appelé photosenseur de référence dans ce qui suit. Le rôle du filtre 6 est de réduire l'intensité lumineuse envoyée sur le photosenseur de référence par le tube fluorescent 3.

La figure 2 est un croquis destiné à montrer schématiquement la constitution de la plaquette 1 de la figure 1; dans l'exemple décrit, la plaquette est une plaquette produite par la société Fairchild sous la référence CCD 121H. Pour des raisons de commodité de dessin et de facilité de lecture de ce dessin, les positions relatives des éléments de la plaquette n'ont pas été respectées.

La plaquette comporte un support semi-conducteur 14, l'alignement 10 de 1728 photosenseurs, deux registres latéraux à transfert de charges, 11, 12, à 864 étages chacun, et un étage de sortie à additionneur, 13. Les 1728 photosenseurs sont constitués de transistors M.O.S. (abréviation des termes anglais metal oxyde semiconductor) photosensibles.

Les entrées des 864 étages du registre 11 sont respectivement reliées à 864 photosenseurs de l'alignement; ces 864 photosenseurs qui seront appelés photosenseurs impairs, sont choisis en ne prenant qu'un photosenseur sur deux dans la succession des photosenseurs de l'alignement. Les liaisons des 864 étages du registre 11 et des 864 photosenseurs impairs se font de la manière suivante : premier étage du registre avec premier photosenseur impair, deuxième étage du registre avec deuxième photosenseur impair etc ... Les 864 autres photosenseurs de l'alignement 10, qui seront appelés photosenseurs pairs dans ce qui suit, sont réunis de la même façon aux 864 étages du registre 12.

Les sorties des registres 11 et 12 sont respectivement reliées à deux entrées de l'étage 13 constitué par un multiplexeur; cet étage de sortie comporte une troisième entrée, C, qui est une entrée de remise à zéro et une sortie S qui est la sortie pour les informations recueillies par les 1728 photosenseurs.

La plaquette 1 est une plaquette à 24 contacts parmi lesquels huit constituent respectivement :

- quatre entrées destinées à recevoir les signaux $A_1$ et $A_2$ de décalage des registres 11 et 12,

- deux entrées, $B_1$ et $B_2$, destinées à recevoir respectivement les signaux de commande de transfert des charges électriques des photosenseurs dans les étages correspondants des registres 11 et 12,

- l'entrée, C, destinée à recevoir les impulsions de remise à zéro de l'étage de sortie 13,

- la sortie S de l'étage de sortie 13.

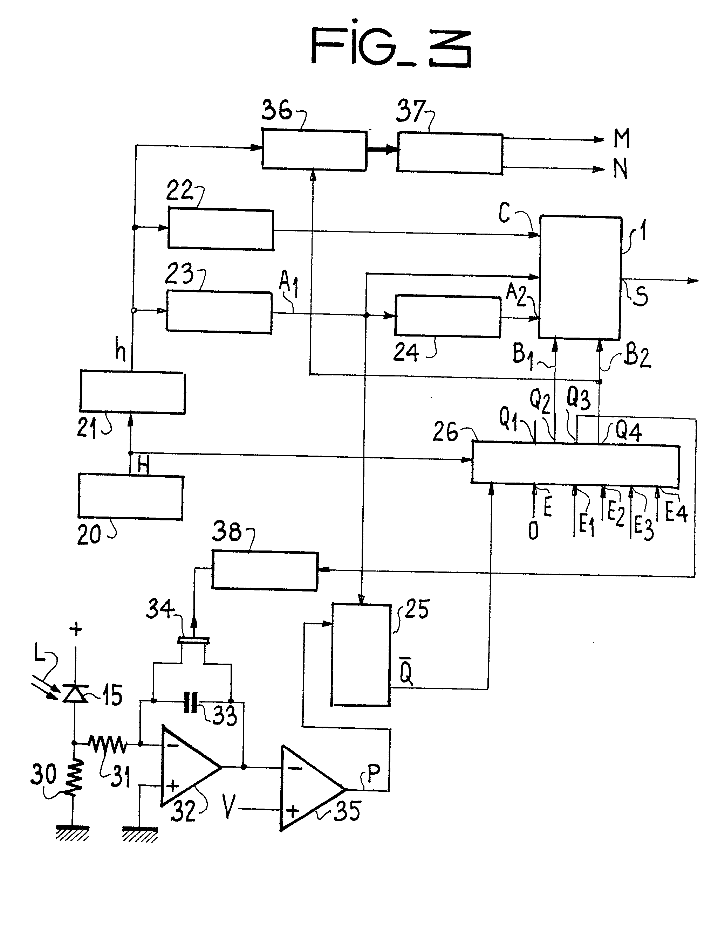

Sur la figure 3 où est représentée la plaquette 1, les signaux envoyés vers cette plaquette sont désignés par les mêmes repères que les entrées auxquelles ils sont appliqués.

La figure 3 représente le dispositif d'analyse par photosenseurs de l'appareil de fac-similé représenté en vue partielle sur la figure 1.

Ce dispositif est conçu pour mesurer à l'aide du photosenseur de référence 15 la quantité de lumière envoyée par la source de lumière (3, 5, figure 1) sur chaque ligne du document à analyser et, quand cette quantité de lumière atteint une valeur prédéterminée, effectuer le transfert des charges contenues dans les 1728 photosenseurs (alignement 10 de photosenseurs, figure 2). Ainsi, pour une ligne donnée, chacun des 1728 photosenseurs reçoit une quantité de lumière indépendante de la tension de la source de tension (non représentée) qui alimente le tube fluorescent (3, figure 1), et indépendante du vieillissement du tube fluorescent.

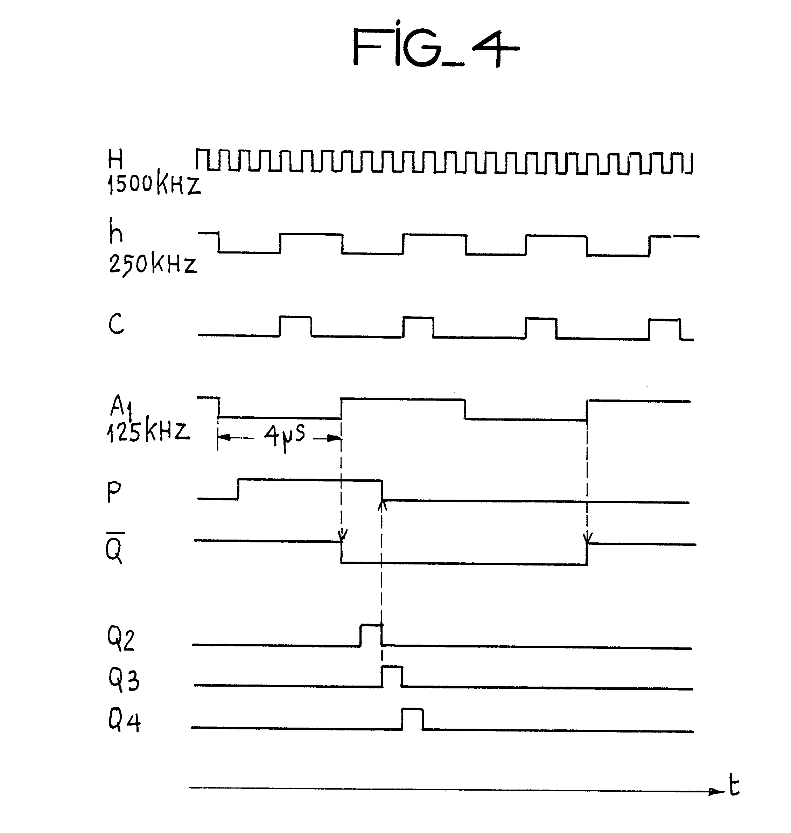

Sur la figure 3 est représenté un circuit d'horloge 20. Ce circuit d'horloge fournit un signal carré H à 1500 kHz (figure 4). Ce signal du circuit d'horloge est appliqué à l'entrée d'un diviseur par 6, 21, qui fournit un signal carré, h, à 250 kHz (figure 4). Le signal H est également appliqué à l'entrée d'horloge d'un registre à décalage 26. Le signal h, après passage dans un circuit de mise en forme 22 est utilisé comme signal de remise à zéro, C, de l'étage de sortie (13, figure 2) de la plaquette 1; le rôle du circuit de mise
en forme 22 est de fournir un signal rectangulaire dont
la durée des niveaux bas est trois fois celle des niveaux hauts.

Le signal h est également appliqué à l'entrée
d'un circuit de comptage 36 et à l'entrée d'un diviseur
par 2, 23, qui fournit un signal carré, $A_1$, à 125 kHz
(figure 4). Ce signal $A_1$ est utilisé comme signal d'horloge d'une bascule de type D, 25; il est également utilisé, ainsi que le signal $A_2$ provenant de l'inversion
du signal $A_1$ dans un inverseur 24, comme signal de décalage des registres 11 et 12 (figure 2). Le circuit de
comptage 36 est suivi par un circuit de décodage 37.

La figure 3 montre le photosenseur de référence
15 qui reçoit de la lumière (flèches L); ce photosenseur est polarisé en inverse : cathode reliée à une
tension positive (+) de 15 volts et anode reliée à la
masse à travers une résistance 30 de 1k.ohms. L'anode
du photosenseur 15 est reliée à travers une résistance
31 de 10 k.ohms à l'entrée "-" d'un amplificateur différentiel 32 dont l'entrée "+" est reliée à la masse
et qui, associé à un condensateur 33 de 100 pF branché
entre son entrée "-" et sa sortie, constitue un circuit intégrateur.

Un transistor à effet de champ 34 de type "canal P" dont la source est reliée à la borne "-" de
l'amplificateur 32 et dont le drain est relié à la
sortie de cet amplificateur, constitue un interrupteur
qui, sous la commande du signal appliqué à sa porte,
permet de décharger le condensateur 33.

Le signal de sortie du circuit intégrateur 32-
33 est appliqué à l'entrée "-" d'un comparateur 35
constitué par un amplificateur différentiel dont l'entrée "+" est reliée à une tension de seuil V de - 4 volts, et dont la sortie est reliée à l'entrée des données de la bascule de type D, 25.

Le signal de commande du transistor à effet de champ 34 est produit par le registre à décalage 26; ce registre reçoit comme signal de décalage le signal H. Le registre 26 est un registre à quatre étages, fabriqué par la société R.C.A sous la référence CD 4035.

Le registre 26 est chargé en parallèle à la valeur binaire "1000", lorsque la sortie $\bar{Q}$ de la bascule 25 passe à "1"; ce chargement se fait grâce à des tensions de niveau "1", "0", "0", "0" respectivement appliquées en permanence sur les quatre entrées de chargement, $E_1$ à $E_4$ du registre 26. Le registre 26 est ensuite décalé par le signal qu'il reçoit sur son entrée d'horloge (signal H, figure 4) grâce à une entrée en série de "0"; cette entrée de "0" est rendue possible grâce à une tension de niveau "0" appliquée sur l'entrée série, E, du registre 26.

Le registre 26 ne contient donc, au plus, qu'un seul "1" à la fois et la position de ce "1" varie en fonction du signal d'horloge H.

Des quatre sorties $Q_1$ à $Q_4$ du registre 26, seules les sorties $Q_2$, $Q_3$ et $Q_4$ sont utilisées. Les sorties $Q_2$ et $Q_4$ sont respectivement reliées aux entrées de commande de transfert $B_1$, $B_2$ des registres de la plaquette 1; la sortie $Q_3$ fournit le signal de commande du transistor à effet de champ 34 à travers un translateur de niveau 38. La sortie $Q_4$ est, de plus, reliée à l'entrée de remise à zéro du circuit de comptage 36.

Quand la valeur "1" apparaît sur les sorties $Q_2$ puis $Q_4$ elle déclenche le transfert des charges des photosenseurs de la plaquette 1 dans les registres de cette même plaquette et, quand cette valeur "1" apparaît sur la sortie $Q_3$, elle remet l'intégrateur 32-33 à zéro en rendant conducteur le transistor à effet de champ 34 qui court-circuite le condensateur 33. De plus le passage à "1" du signal de la sortie $Q_4$ remet à zéro le circuit de comptage 36.

Le photosenseur de référence 15, quand il reçoit de la lumière du tube fluorescent (3, figure 1), fournit du courant à l'intégrateur 32-33, et les réglages sont effectués pour que, en moyenne, au bout d'environ 10 millisecondes d'éclairement la tension de sortie de l'intégrateur 32-33 entraîne un passage de "0" à "1" de la tension de sortie du comparateur 35.

Lorsque le photosenseur 15 a fourni assez de courant à l'intégrateur 32-33 pour faire basculer le comparateur 35 (signal P à "1"), le signal $\bar{Q}$ de la bascule 25 passe de "1" à "0" sur le premier front montant du signal $A_1$ (figure 4). Ce passage à "0" du signal $\bar{Q}$ autorise le décalage sous l'action du signal H du contenu du registre 26. Or, au moment où cette autorisation de décalage est reçue, le contenu du registre 26 est "1000", le chargement de cette valeur dans le registre ayant été provoqué par le précédent maintien à "1" du signal $\bar{Q}$ ; ainsi le décalage sous l'action du signal H du contenu du registre 26 amène l'apparition d'une impulsion sur la sortie $Q_2$ du registre puis sur la sortie $Q_3$ puis sur la sortie $Q_4$ (voir figure 4).

L'impulsion sur la sortie $Q_2$ commande le transfert du contenu des photosenseurs impairs dans le registre 11 de la plaquette 1.

L'impulsion sur la sortie $Q_3$ entraîne la remise à zéro de l'intégrateur 32-33 grâce au transistor 34 qui court-circuite le condensateur 33, ce qui fait passer à "0" le signal P du comparateur 35; le signal de la sortie $\bar{Q}$ de la bascule 25 repasse alors à "1" dès le premier front montant du signal $A_1$ (figure 4) ce qui autorise le chargement de la valeur "1000" dans le registre 26.

L'intégrateur 32-33 étant remis à zéro par l'impulsion fournie par la sortie $Q_3$, ne pourra, grâce au courant produit par le photosenseur de référence, refaire passer à "1" le comparateur 35 qu'environ 10 mS après le précédent passage de "0" à "1" de ce comparateur (le temps qui s'écoule entre le passage à "1" du comparateur 35 et la remise à zéro de l'intégrateur est négligeable). Ainsi le dispositif selon la figure 3 fournit environ toutes les 10 mS, et de manière asynchrone, des signaux d'information relatifs aux charges emmagasinées dans les 1728 photosenseurs.

L'impulsion sur la sortie $Q_4$ commande le transfert du contenu des photosenseurs pairs dans le registre 12 de la plaquette 1. Cette impulsion commande également la remise à zéro du circuit de comptage 36 qui compte les passages à "1" du signal h. Le circuit de décodage 37 fournit, sur une sortie M, une impulsion dite de "début de lecture" quand le circuit de comptage passe par la valeur 5 et, sur une sortie N, une impulsion dite de "fin de lecture" quand le circuit de comptage passe par la valeur 1732. Ces impulsions de début et de fin de lecture correspondent, du fait des caractéristiques de la plaquette 1 et du synchronisme entre les signaux h, $A_1$ et $A_2$, à l'arrivée, sur la sortie S de la plaquette 1, des informations provenant du premier et du dernier des 1728 photosenseurs de l'alignement de photosenseurs.

Les informations de début et de fin de lecture et les informations à transmettre par fac-similé (sortie S de la plaquette 1) sont fournies par le dispositif d'analyse selon la figure 3 à un ensemble de traitement comportant un microprocesseur. Cet ensemble de traitement peut, au plus vite toutes les 40 millisecondes, traiter les informations recueillies au moyen des 1728 photosenseurs.

Dans l'appareil de fac-similé qui a servi pour la description qui précède, lorsque l'ensemble de traitement est disponible pour traiter les informations relatives à une ligne il prend en compte les signaux de la sortie S de la plaquette 1 dès l'arrivée d'une impulsion de "début de ligne". Il est à noter qu'en même temps que commence le traitement des informations relatives à une ligne, le dispositif de déplacement du document déclenche une avance telle que la ligne suivante du document soit en position de lecture; ce déplacement dure environ 20 mS dans le cas de l'appareil décrit. Les informations enregistrées dans les photosenseurs pendant ce déplacement et envoyées sur la sortie S, ne correspondent pas à la ligne suivante et ne peuvent être utilisées; cela est sans importance puisque le traitement des informations relatives à une ligne dure de l'ordre de 40 mS, qu'une nouvelle information relative à l'état des 1728 photosenseurs est envoyée environ toutes les 10 mS, et que le déplacement d'une ligne N (N entier positif) à la ligne N+1 suivante commence au début du traitement de la ligne N et se termine au moins 40 - 20 = 20 mS avant le début du traitement de la ligne N+1.

D'autres dispositifs d'analyse peuvent être envisagés sans sortir du cadre de l'invention; c'est ainsi que la remise à zéro du photosenseur de référence, au lieu de se faire de façon asynchrone en fonction du signal P, peut se faire de façon régulière, par exemple avec une période de 13 mS; il est à remarquer qu'il est alors nécessaire d'effectuer une remise à zéro des photosenseurs d'analyse de document au début de chacune de ces périodes.

De même le dispositif d'analyse peut comporter plusieurs photosenseurs de référence disposés de manière à recevoir chacun la lumière d'un point différent de la source de lumière, cette dernière pouvant d'ailleurs comporter plusieurs éléments rayonnants, par exemple deux tubes fluorescents.

Quant à ce ou ces photosenseurs de référence, ils peuvent soit être placés au voisinage immédiat de la source lumineuse, soit être incorporés dans la plaquette 1. Il est à noter qu'il avantageux de disposer le ou les photosenseurs de référence, au voisinage de la plaquette ou à l'intérieur de celle-ci car, d'une part, ils sont soumis à une température moins élevée qu'au voisinage de la source lumineuse et, d'autre part, le dispositif d'analyse est alors pratiquement insensible aux variations de température dans la mesure où les photosenseurs de l'alignement et le ou les photosenseurs de référence sont réalisés selon la même technologie; en effet les sensibilités de tous les photosenseurs étant affectées par la température selon une même loi du fait de leur technologie identique et tous ces photosenseurs étant sensiblement à la même température, il en résulte que, pour la lecture d'un point donné d'un document par un photosenseur de l'alignement, la durée d'intégration dans ce photosenseur diminue si la température s'élève mais le signal électrique correspondant à ce point donné reste le même.

## REVENDICATIONS

1.   Dispositif d'analyse ligne par ligne d'un document, comportant une source de lumière, un circuit de lecture incluant n photosenseurs (n supérieur à 1), pour recevoir une partie de la lumière ayant éclairé une ligne du document afin d'élaborer une information, et des moyens de commande pour rendre sensiblement constante la quantité de lumière reçue par le document pendant l'élaboration de l'information, ces moyens de commande comportant un $(n+1)^e$ photosenseur, ce $(n+1)^e$ photosenseur étant éclairé par la source, caractérisé en ce que les moyens de commande comportent : des moyens d'intégration incluant le $(n+1)^e$ photosenseur et fournissant un premier signal représentatif de la quantité de lumière fournie par la source; des moyens de comparaison fournissant un second signal quand le premier signal atteint une valeur donnée, et des moyens de déclenchement pour déclencher, en fonction du second signal, l'envoi de l'information produite par le circuit de lecture.

2.   Dispositif d'analyse selon la revendication 1, caractérisé en ce que les moyens de déclenchement sont couplés aux moyens d'intégration pour remettre à zéro les moyens d'intégration en fonction du second signal.

3.   Dispositif d'analyse selon la revendication 2, caractérisé en ce que les moyens d'intégration comportent un condensateur et en ce que le $(n+1)^e$ photosenseur est une photodiode qui, lorsqu'elle est éclairée, fournit un courant de charge du condensateur.

4. Appareil de fac-similé, caractérisé en ce qu'il comporte un dispositif d'analyse selon l'une des revendications précédentes.

# FIG_1

# FIG_2

# FIG_3

# FIG_4

Office européen
des brevets

**RAPPORT DE RECHERCHE EUROPEENNE**

0011023

Numéro de la demande

EP 79 40 0786

| Catégorie | Citation du document avec indication, en cas de besoin, des parties pertinentes | Revendication concernee |
|-----------|--------------------------------------------------------------------------------|-------------------------|
| | **DOCUMENTS CONSIDERES COMME PERTINENTS** | |
| A | US - A - 3 544 713 (CASE)<br>* Colonne 3, lignes 23-73 * | 1 |
| A | US - A - 3 800 079 (McNEIL)<br>* Colonne 2, ligne 20 à colonne 4, ligne 66 * | 1 |
| A | FR - A - 2 379 955 (MATSUSHITA ELECTRIC INDUSTRIAL COMPANY)<br>* Page 3, ligne 29 à page 6, ligne 18 * | 1 |
| A | US - A - 3 867 569 (WATSON)<br>* Colonne 2, ligne 60 à colonne 3, ligne 40; colonne 5, lignes 25-40 * | 1 |
| E | EP - A - C 006 570 (IBM)<br>* Page 4, ligne 17 à page 5, ligne 25; page 8, ligne 25 à page 11, ligne 22 * | 1,2 |

**CLASSEMENT DE LA DEMANDE (Int. Cl. ³)**

H 04 N 1/028

**DOMAINES TECHNIQUES RECHERCHES (Int. Cl. ³)**

H 04 N 1/028
1/024
1/40
1/12

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|----------------------|-----------------------------------|-------------|
| La Haye | 08-02-1980 | VERSCHELDEN |

OEB Form 1503.1   06.78